# EUROPEAN PATENT APPLICATION

(11) **EP 4 717 563 A1**
(43) Date of publication of application: **01.04.2026**
(21) Application number: 25202730.5
(22) Date of filing: 17.09.2025
(51) Int. Cl.: B62D 25/08

(54) **SUPPORT BEAM**

(30) Priority: 17.09.2024 GB 202413634
(71) Applicant: Jaguar Land Rover Limited, Coventry, Warwickshire CV3 4LF (GB)
(72) Inventor: Lidgard, Brian, Coventry, CV3 4LF (GB); Ellis, Andrew, Coventry, CV3 4LF (GB); Matthews, James, Coventry, CV3 4LF (GB); Caratanase, Lucian, Coventry, CV3 4LF (GB)
(74) Representative: Jaguar Land Rover Patents Department

(57) **Abstract**

Aspects of the present invention relate to a support beam (100) for a vehicle (400). The support beam (100) is configured to structurally support a first suspension component (302) and a second suspension component (304). The support beam (100) includes a first mounting member (102) configured for connection to the first suspension component (302) at a first side (402) of a vehicle (400); a second mounting member (104) configured for connection to the second suspension component (304) at a second side (404) of a vehicle (400); and a housing portion (106) configured to mount therein high voltage electrical components (206). The housing portion (106) of the support beam (100) is located between the first mounting member (102) of the support beam (100) and the second mounting member (104) of the support beam (100).

## Description

### TECHNICAL FIELD

The present disclosure relates to a support beam. Aspects of the invention relate to a support beam for a vehicle, a vehicle comprising a support beam and a method of manufacturing a support beam.

### BACKGROUND

It is known to provide vehicle bodies that are designed to accommodate internal components of the vehicle, including structural elements which provide structural integrity to the vehicle, as well as powertrain components, for example electric drive units for electric vehicles.

Electric drive units of electric vehicles include power electronics, a gearbox and an electric motor, all of which need to be accommodated, and protected from damage, within the vehicle body.

There is a desire to improve the way in which the space within the vehicle body is used, in order to maximise functionality, reduce cost and weight, reduce manufacturing assembly time and to improve the noise, vibration and harshness characteristics of the vehicle.

It is an aim of the present invention to address one or more of the disadvantages associated with the prior art.

### SUMMARY OF THE INVENTION

Aspects and embodiments of the invention provide a support beam for a vehicle and a vehicle comprising a support beam as claimed in the appended claims. Aspects and embodiments of the invention also provide a method of manufacturing a support beam.

According to an aspect of the present invention there is provided a support beam for a vehicle, for example a support beam that is configured to structurally support two structures on opposing sides of a vehicle. The support beam may be configured to structurally support a first suspension component and a second suspension component of a vehicle. The support beam may include a first mounting member configured for connection to the first suspension component at a first side of a vehicle. The support beam may include a second mounting member configured for connection to the second suspension component at a second side of a vehicle. The support beam may include a housing portion. The housing portion may be configured to mount therein high voltage electrical components. The housing portion may be located between the first mounting member of the support beam and the second mounting member of the support beam.

According to another aspect of the present invention there is provided a support beam for a vehicle, wherein the support beam is configured to structurally support a first suspension component and a second suspension component, the support beam including a first mounting member configured for connection to the first suspension component at a first side of a vehicle, a second mounting member configured for connection to the second suspension component at a second side of a vehicle, and a housing portion configured to mount therein high voltage electrical components, wherein the housing portion of the support beam is located between the first mounting member of the support beam and the second mounting member of the support beam.

Advantageously, the invention enables high voltage electrical components and the structural cross member of a vehicle to be combined in a single component that provides structural integrity to the vehicle, as well as accommodating and providing protection for electrical components of the vehicle. In this way, the function of a structural cross member and a housing for electrical components can be combined in a single component which occupies a smaller volume within the available space. In some examples the single component may have a lower mass than if separate components were provided for structural support and electrical element housing.

The support beam may be a transverse support beam. The support beam may extend across the vehicle in a direction that is perpendicular to the direction of (usual forward) travel of the vehicle. The support beam may be arranged to resist relative lateral movement of the first suspension component and the second suspension component. The support beam may be configured to maintain the stability of a suspension system of the vehicle. The support beam may be configured to ensure that a first body panel on the first side of the vehicle and a second body panel on a second side of the vehicle are aligned. Advantageously, the support beam contributes to the local dynamic stiffness of the suspension components and provides structural integrity to the vehicle structure.

In an embodiment, the first mounting member, the second mounting member and the housing portion are produced as an integral component. By producing the first mounting member, the second mounting member and the housing portion as an integral component, it is possible to provide more functionality within a smaller space, as well as reduce the weight compared to using separate components for structural support and electrical element housing.

The first mounting member, the second mounting member and the housing portion may, for example, be formed (that is, fashioned from a metal part through mechanical deformation through reshaping without adding or removing material). The first mounting member, the second mounting member and the housing portion may be press formed as an integral component.

Alternatively, the first mounting member, the second mounting member and the housing portion may be cast. The first mounting member, the second mounting member and the housing portion may be die cast, for example high pressure die cast.

Advantageously, the integral component can be manufactured and assembled more efficiently than separate components, and provides improved noise, vibration and harshness as there are fewer parts joined together which might rattle. By eliminating the need for components to join separate components together, the mass of the integral component is also reduced compared to the combined mass of separate components for structural support and electrical element housing, together with fixing components, e.g. bolts or other mechanical fastenings.

The first mounting member of the support beam may include a first rib. Additionally or alternatively, the second mounting member of the support beam may include a first rib. At least one of the first mounting member of the support beam and the second mounting member of the support beam includes a first rib.

The or each first rib may extend longitudinally with respect to the support beam. The or each first rib may extend in a direction that is parallel to a longitudinal axis of the support beam. The longitudinal axis of the support beam may extend between the first mounting member and the second mounting member. The longitudinal axis of the support beam may be a transverse axis of the vehicle. The longitudinal axis of the support beam may be perpendicular to the direction of travel of the vehicle.

The or each first rib may extend from an outer wall of the housing portion. The or each first rib may be continuous with an outer wall, for example, the outer wall of the housing portion.

The first mounting member of the support beam may include a first rib that extends from and/or is continuous with a first outer wall of the housing portion. Additionally or alternatively, the first mounting member of the support beam may include a second rib that extends from and/or is continuous with a second outer wall of the housing portion. The first mounting member of the support beam may include a third rib. The third rib of the first mounting portion may be positioned between the first rib of the first mounting portion and the second rib of the first mounting portion.

The first rib and/or the second rib and/or the third rib of the first mounting member may extend longitudinally with respect to the support beam. The first rib and/or the second rib and/or the third rib of the first mounting member may extend in a direction that is parallel to a or the longitudinal axis of the support beam. The longitudinal axis of the support beam may extend between the first mounting member and the second mounting member. The longitudinal axis of the support beam may be a transverse axis of the vehicle. The longitudinal axis of the support beam may be perpendicular to the direction of travel of the vehicle.

The second mounting member of the support beam may include a first rib that extends from and/or is continuous with a or the first outer wall of the housing portion. Additionally or alternatively, the second mounting member of the support beam may include a second rib that extends from and/or is continuous with a or the second outer wall of the housing portion. The second mounting member of the support beam may include a third rib. The third first rib of the second mounting portion may be positioned between the first rib and the second rib of the second mounting member.

The first rib of the second mounting member may be referred to as a fourth rib. The second rib of the second mounting member may be referred to as a fifth rib. The third rib of the second mounting member may be referred to as a sixth rib.

The first rib and/or the second rib and/or the third rib of the second mounting member may extend longitudinally with respect to the support beam. The first rib and/or the second rib and/or the third rib of the second mounting member may extend in a direction that is parallel to a or the longitudinal axis of the support beam. The longitudinal axis of the support beam may extend between the first mounting member and the second mounting member. The longitudinal axis of the support beam may be a transverse axis of the vehicle. The longitudinal axis of the support beam may be perpendicular to the direction of travel of the vehicle.

The rib or ribs advantageously improve the dynamic stiffness and/or the torsional strength of the vehicle.

The support beam may include a housing portion projection. The housing portion projection may be configured to mount therein high voltage electrical components. The housing portion projection may be a first housing portion projection. The support beam may include a further, for example a second, housing portion projection. The further, for example the second, housing portion projection may be configured to mount therein high voltage electrical components. The or each housing portion projection may extend outwardly from the housing portion in a direction that is parallel to the direction of travel of the vehicle. The or each housing portion projection may extend toward the front of the vehicle. Alternatively, the or each housing portion projection may extend toward the rear of the vehicle. The first housing portion projection may extend toward the front of the vehicle and the further housing portion projection may extend toward the rear of the vehicle. Alternatively, the first housing portion projection may extend toward the rear of the vehicle and the further housing portion projection may extend toward the front of the vehicle.

The housing portion projection provides additional space for electrical components, for example high voltage electrical components.

The housing portion may include an aperture. The housing portion may include any number of apertures. The or each aperture may be configured to receive an electrical connector.

Advantageously, the or each aperture enables the structural integrity of the support beam to be maintained, whilst enabling the electrical functionality.

The support beam may comprise a cover. The cover may be configured to close an opening of the housing portion, in use.

Advantageously, the opening provides access to the high voltage electrical components within the housing portion and the cover protects the high voltage electrical components, in use.

The opening of the housing portion may be on a lower surface of the support beam. The opening of the housing portion may be provided underneath the support beam, in use.

The position of the opening provides further protection for components, for example high voltage electrical components, within the housing portion of the support beam.

The support beam provides improved stiffness and torsional strength to the vehicle by contributing to the local dynamic stiffness of the first suspension component and/or the second suspension component.

The support beam may also include high voltage electrical components. The high voltage electrical components may be mounted within the housing portion.

The support beam may include aluminium or an aluminium alloy. The first mounting member, the second mounting member and the housing portion may include aluminium or the, for example the same, aluminium alloy.

The aluminium alloy of the support beam, for example the aluminium alloy of the first mounting member and/or the second mounting member and/or the housing portion of the support beam, may comprise one or more of silicon, manganese and magnesium. The aluminium alloy may, for example, comprise an alloy from the AlSi₇MnMg family. The aluminium alloy may comprise C611 aluminium alloy, for example sold under the name EZCast.

The aluminium alloy may comprise a casting aluminium alloy. The casting aluminium alloy may be, for example, a heat treatable casting aluminium alloy.

The first suspension component and the second suspension component may include aluminium or an aluminium alloy.

The aluminium alloy, for example, of the first suspension component and/or the second suspension component, may comprise one or more of silicon, manganese and magnesium. The aluminium alloy may, for example, comprise an alloy from the AlSi₇MnMg family. The aluminium alloy may comprise C611 aluminium alloy. For example, sold under the name EZCast.

The aluminium alloy may comprise a casting aluminium alloy. The casting aluminium alloy may be, for example, a heat treatable casting aluminium alloy.

The same materials may be selected for the support beam, the first suspension component and the second suspension component in order to reduce the risk of galvanic corrosion. Galvanic corrosion refers to corrosion damage which occurs when two dissimilar materials, for example two dissimilar metals, are brought into contact in a wet environment.

According to another aspect of the invention there is provided a vehicle. The vehicle may include the support beam of any of the preceding aspects of the invention.

The support beam may be located forward of an A-pillar of the vehicle.

The location of the support beam enables electrical components to be housed in a front portion of vehicle. This is beneficial for vehicles having a 'cab rearward' layout as it enables batteries and associated components to be moved forward within an efficient front end crash logical system (in which space for collapse and the energy absorption capability is maximised).

The first mounting member of the support beam may be connected to a first suspension component on a first side of the vehicle. The second mounting member of the support beam may be connected to the second suspension component on a second side of the vehicle. The support beam may be a transverse support beam. The support beam may extend across the vehicle in a direction that is perpendicular to the direction of travel of the vehicle. The support beam may be arranged to resist relative lateral movement of the first suspension component and the second suspension component. The support beam may be configured to maintain the stability of a suspension system of the vehicle. The support beam may be configured to ensure that a first body panel on the first side of the vehicle and a second body panel on a second side of the vehicle are aligned.

The support beam advantageously provides improved stiffness and torsional strength, as well as more efficient manufacture and assembly of the vehicle components.

According to another aspect of the invention there is provided a method of manufacturing the support beam according to the preceding aspects of the invention. The method may include producing a support beam having a first mounting member, a second mounting member and a housing portion. The first mounting member may be configured for connection to the first suspension component at a first side of a vehicle. The second mounting member may be configured for connection to the second suspension component at a second side of a vehicle. The housing portion may be positioned between the first mounting member of the support beam and the second mounting member of the support beam. The housing portion may be configured for housing high voltage electrical components.

According to an aspect of the invention there is provided a method of manufacturing the support beam according to the preceding aspects of the invention, the method including producing a support beam having a first mounting member configured for connection to the first suspension component at a first side of a vehicle; a second mounting member configured for connection to the second suspension component at a second side of a vehicle; and a housing portion between the first mounting member of the support beam and the second mounting member of the support beam; wherein the housing portion is configured for housing high voltage electrical components.

The method enables efficient manufacture and assembly because one component provides (at least) two functions.

In an embodiment, the first mounting member, the second mounting member and the housing portion are produced as an integral component.

The method enables the manufacture of a component that provides more functionality in a smaller space, as well as having less parts to rattle (therefore providing improved noise, vibration and harshness).

The integral component may be produced by a forming method. The first mounting member, the second mounting member and the housing portion may be produced by press forming.

The integral component may be produced by a casting method. The first mounting member, the second mounting member and the housing portion may be produced by die casting, for example high pressure die casting.

The high pressure die casting method is cost effective and enables production of components with the required stiffness and wall thickness.

Following forming or casting, the integral component may be heat treated.

The cast integral component may be heat treated, for example tempered. The cast integral component may be tempered. The cast integral component may be heated in an oven, for example at a temperature above 300°C, or above 350°C, or above 400°C, or above 450°C, or above 500°C. The cast integral component may be quenched, for example in water. The cast integral component may be aged, for example by heating to a temperature of at least 60°C, at least 90°C, or at least 100°C, or at least 125°C, or at least 150°C. The tempering process may be, for example a T6 tempering process.

The heating to a temperature of at least 60°C, at least 90°C, or at least 100°C, or at least 125°C, or at least 150°C may be a first aging process.

The method may include a second aging process. The cast integral component may be heated to a temperature of at least 100°C, at least 150°C, or at least 175°C, or at least 200°C, or at least 225°C. The tempering process may be, for example a T7 tempering process.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### BRIEF DESCRIPTION OF THE DRAWINGS

One or more embodiments of the invention will now be described, by way of example only, with reference to the accompanying drawings, in which:
Figure 1 shows a top view of a support beam according to an embodiment of the invention;
Figure 2 shows a bottom view of the support beam of Figure 1;
Figure 3 shows a front section view of the support beam Figure 1 mounted to a first suspension component and a second suspension component;
Figure 4 illustrates a method of manufacturing a support beam in accordance with one embodiment of the invention;
Figure 5 shows a plan view of a vehicle including a support beam according to an embodiment of the invention; and
Figure 6 shows a side view of the vehicle of Figure 5.

### DETAILED DESCRIPTION

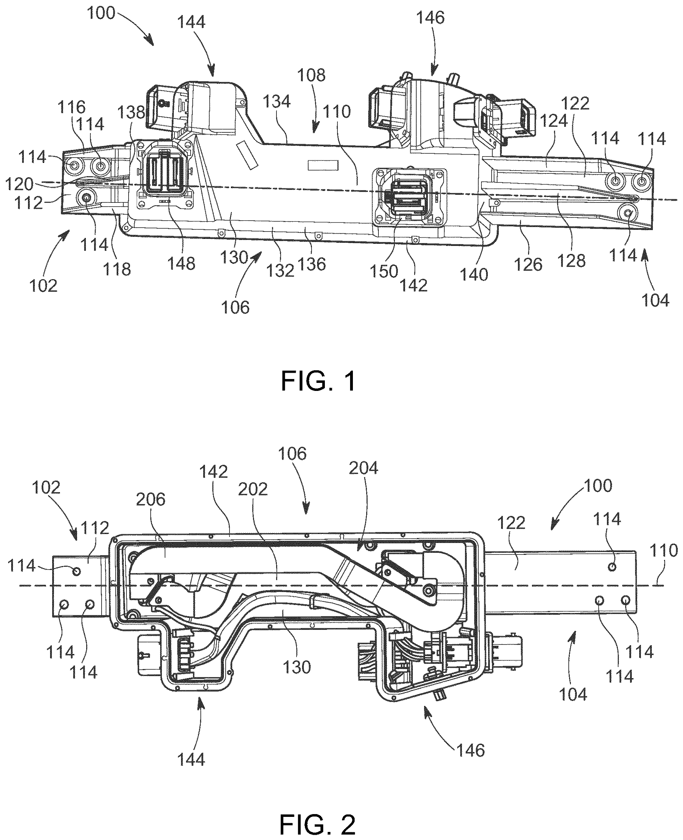

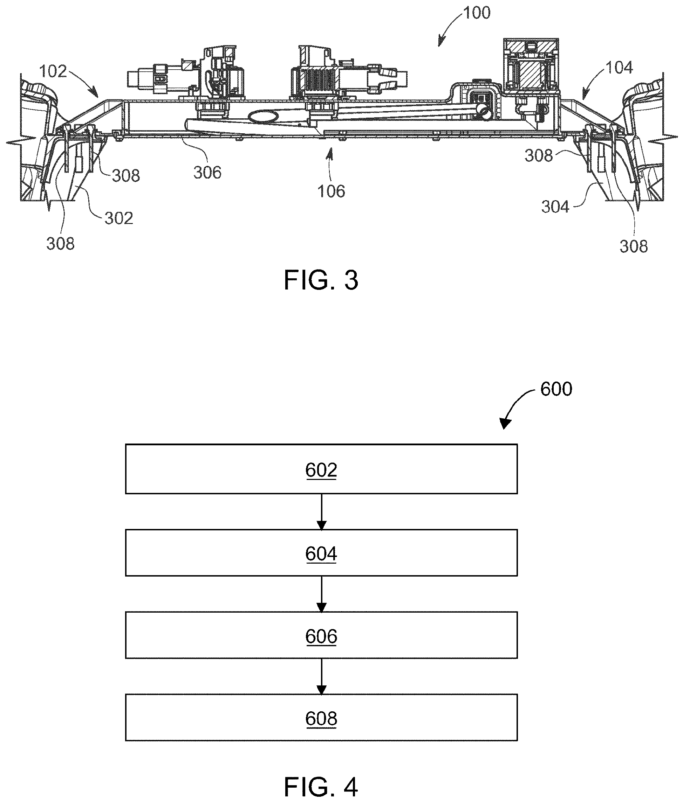

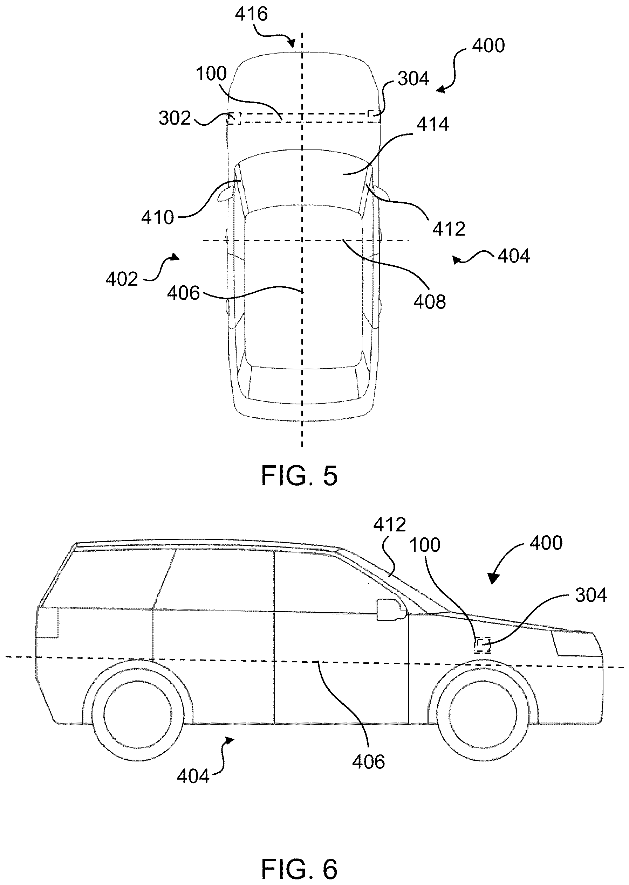

A support beam 100 in accordance with an embodiment of the present invention is described herein with reference to the accompanying Figure 1 to Figure 3. A method of manufacturing the support beam 100 is described with reference to Figure 4. As shown in Figure 5 and Figure 6, the support beam 100 is installed in a vehicle 400.

With reference to Figure 1, Figure 2 and Figure 3, there is illustrated a support beam 100 for a vehicle 400. The support beam 100 includes a first mounting member 102, a second mounting member 104 and a housing portion 106.

The support beam 100 has a support beam longitudinal axis 110 which extends between the first mounting member 102 and the second mounting member 104.

As will be described in more detail, with reference to Figure 4, the first mounting member 102, the second mounting member 104 and the housing portion 106 are produced as an integral component 108 from an aluminium alloy. In other words, the first mounting member 102, the second mounting member 104 and the housing portion 106 are unitary.

The first mounting member 102 is provided at one end of the support beam 100 and has a planar first mounting portion 112 through which three holes 114 extend. A first rib 116, a second rib 118 and a third rib 120 extend upwardly from a surface of the first mounting portion 112.

The second mounting member 104 is provided at the opposite end of the support beam 100 to the first mounting member 102. The second mounting member 104 has a planar second mounting portion 122 through which three holes 114 extend. A fourth rib 124, a fifth rib 126 and a sixth rib 128 extend upwardly from the second mounting portion 122.

The housing portion 106 is positioned between the first mounting member 102 and the second mounting member 104. The housing portion 106 includes a plate portion 130 from which an outer wall 132 extends. The plate portion 130 includes two apertures 148, 150. The outer wall 132 includes a first longitudinal outer wall portion 134, a second longitudinal outer wall portion 136, a first transverse outer wall portion 138 and a second transverse outer wall portion 140. The outer wall 132 also includes a flange 142 which extends around the periphery of the housing portion 106. The housing portion 106 includes two housing portion projections 144, 146 which extend outwardly from the first longitudinal outer wall portion 134.

With particular reference to Figure 2, the plate portion 130 and the outer wall 132 of the housing portion 106 define a cavity 202 having an opening 204. The cavity 202 is configured to accommodate or house high voltage electrical components 206 of the support beam 100. In other words, the housing portion 106 of the support beam 100 is configured to mount therein high voltage electrical components 206.

Referring now to Figure 3, a cover 306 is mounted to the flange 142 of the outer wall 132 in order to protect the high voltage electrical components 206 within the housing portion 106 from debris and other environmental contaminants.

A method of manufacturing the support beam 100 will now be described with particular reference to Figure 4.

The method includes producing a support beam 100 including a first mounting member 102 that is configured for connection to the first suspension component 302 at a first side 402 of a vehicle 400; a second mounting member 104 that is configured for connection to the second suspension component 304 at a second side 404 of the vehicle 400; and a housing portion 106 between the first mounting member 102 of the support beam 100 and the second mounting member 104 of the support beam 100; wherein the housing portion 106 is configured for housing high voltage electrical components 206.

The method may also include producing the first mounting member 102, the second mounting member 104 and the housing portion 106 as an integral, i.e. unitary, component. The production of the support beam 100 as an integral component enables the manufacture of a component that provides more functionality in a smaller space, as well as having less parts to rattle (therefore providing improved noise, vibration and harshness).

In an example of the invention, the method may be a casting method, for example a high pressure die casting method 600.

In a first step 602 of the high pressure die casting method 600, a mould defining the overall shape of the support beam 100 is provided and prepared. In a subsequent step 604, molten aluminium alloy is injected into the mould at high speed and high pressure. The mould is closed and sealed in order to ensure that the pressure within the mould is maintained, for example at approximately 10 MPa to approximately 180 MPa, until the molten aluminium alloy has cooled and solidified. In step 606, the cast support beam 100 is ejected from the mould. The cast support beam 100 is then, in step 608, heat treated.

Advantageously, the high pressure die casting method 600 can produce the support beam 100 as an integral component 108 with high precision and with improved mechanical properties, in particular the bending moment and torsional strength required for use in a vehicle 400.

Step 602 may also include applying a lubricant to an inner surface of the mould that forms the outer wall 132 and plate portion 130. This beneficially helps to regulate the temperature of the mould, whilst also creating a film between the molten metal and the mould, thereby facilitating removal of the casting from the mould.

Following step 606, any scrap metal retained within the mould may be removed in order to prepare the mould for the next casting.

Heat treatment step 608 may include tempering the cast support beam 100. The cast support beam may be, for example, heated in an oven, for example at a temperature above 300°C. The cast support beam may be quenched, for example in water. The cast support beam may also be aged, for example by heating to a temperature of at least 60°C. The tempering process may be, for example, a T6 tempering process.

In some examples of the invention, the heating to a temperature of at least 60°C is a first aging process. The method may include a second aging process. In the second aging process, the cast support beam may be heated to a temperature of at least 100°C. In other words, the tempering process may be T7 tempering process.

Installation of the support beam 100 on a vehicle will now be described. Referring to Figure 5 and Figure 6, the vehicle 400 has a first side 402, a second side 404, a vehicle longitudinal axis 406 and a vehicle transverse axis 408. The vehicle 400 also has a first A pillar 410 at the first side 402 and a second A pillar at the second side 404. The first A pillar 410 and the second A pillar 412 form upright structures that support a windscreen 414 toward a front 416 of the vehicle 400.

Referring now to Figure 1, Figure 2 and Figure 3, high voltage electrical components 206 are placed within the cavity 202 of the housing portion 106. Electrical connectors of the high voltage electrical components 206 are aligned with apertures 148, 150 in the housing portion 106. The cover 306 is secured to the flange 142 by fasteners in order to secure the high voltage electrical components 206 and protect them from debris and other environmental contaminants.

As shown Figure 3, the first mounting member 102 of the support beam 100 is connected to a first suspension component 302 at the first side 402 of the vehicle 400. The first mounting portion 112 is aligned with the first suspension component 302 and a fastener 308 is passed through each of the holes 114 in order to secure the first mounting portion 112 to the first suspension component 302. In a similar way, the second mounting member 104 of the support beam 100 is connected to a second suspension component 304 at the second side 404 of the vehicle 400. The second mounting portion 122 is aligned with the second suspension component 304 and a fastener 308 is passed through each of the holes 114 in order to secure the second mounting portion 122 to the second suspension component 304.

Referring again to Figure 5, the support beam 100 thus extends across the vehicle 400 from the first side 402 of the vehicle 400 to the second side 404 of the vehicle 400. The support beam longitudinal axis 110 (as shown in Figure 1 and Figure 2) is therefore parallel to the vehicle transverse axis 408. In other words, the support beam longitudinal axis 110 is perpendicular to the direction in which the vehicle 400 moves, or the vehicle longitudinal axis 406. The bending and/or torsional strength of the support beam 100 supports panels at the first side 402 and the second side 404 of the vehicle 400. The support beam 100 contributes to the local dynamic stiffness of the first suspension component 302 and the second suspension member 304. The support beam 100 may, for example, contribute to the local dynamic stiffness of a spring and an upper control arm mount of the first suspension component 302 and a spring and an upper control arm mount of the second suspension component 304 (neither of which suspension components are shown). The housing portion 106 of the support beam 100 provides space for the storage of high voltage electrical components 206.

In the embodiment described above, each of the first mounting portion 112 and the second mounting portion 122 includes three holes 114 through which fasteners 308 are inserted to secure the support beam 100 to the first suspension component 302 and the second suspension component 304. It will be appreciated that, in other embodiments of the invention, the first mounting portion and/or the second mounting portion may include one, two, three or any number of holes. It will also be appreciated that any suitable means for securing the first mounting member and the second mounting member of the support beam 100 to the first suspension component 302 and the second suspension component 304 may be used. Such means may, for example include screws, bolts, rivets, structural adhesives and the like.

In the embodiment described above, the first mounting member and the second mounting member of the support beam are secured to a first suspension component and a second suspension component, respectively. It will be appreciated that, in other embodiments of the invention, the first mounting member and the second mounting member may be secured to any component at the first side and the second side of the vehicle, respectively.

In the embodiment described above, the integral component 108 of the support beam 100 including the first mounting member 102, the second mounting member 104 and the housing portion 106 is produced by a high pressure die casting method. It will be appreciated that, in other embodiments of the invention, the integral component 108 of the support beam 100 may be produced by any suitable method results in an integrated structure. The integral component 108 of the support beam 100 may, for example, be produced by press forming.

It will be appreciated that various changes and modifications can be made to the present invention without departing from the scope of the present application.

## Claims

1. A support beam for a vehicle, wherein the support beam is configured to structurally support a first suspension component and a second suspension component, the support beam comprising:
a first mounting member configured for connection to the first suspension component at a first side of a vehicle;
a second mounting member configured for connection to the second suspension component at a second side of a vehicle; and
a housing portion configured to mount therein high voltage electrical components;
wherein the housing portion of the support beam is located between the first mounting member of the support beam and the second mounting member of the support beam.

2. The support beam of claim 1, wherein the first mounting member, the second mounting member and the housing portion are produced as an integral component.

3. The support beam of claim 2, wherein the integral component comprising the first mounting member, the second mounting member and the housing portion is formed.

4. The support beam of claim 2, wherein the integral component comprising the first mounting member, the second mounting member and the housing portion is cast.

5. The support beam of any one of claims 1 to 4, wherein at least one of the first mounting member of the support beam and the second mounting member of the support beam comprises a first rib.

6. The support beam of any one of claims 1 to 5, comprising a housing portion projection configured to mount therein high voltage electrical components.

7. The support beam of any one of claims 1 to 6, wherein the housing portion comprises an aperture configured to receive an electrical connector.

8. The support beam of any one of claims 1 to 7, comprising high voltage electrical components, wherein the high voltage electrical components are mounted within the housing portion.

9. The support beam of any one of claims 1 to 8, comprising aluminium or an alloy of aluminium.

10. The support beam of claim 9, wherein the first suspension component and the second suspension component comprise aluminium or the alloy of aluminium.

11. A vehicle comprising the support beam of any one of claims 1 to 10.

12. The vehicle of claim 11, wherein the support beam is located forward of an A-pillar of the vehicle.

13. The vehicle of claim 11 or 12, wherein
the first mounting member of the support beam is connected to the first suspension component on a first side of the vehicle; and
the second mounting member of the support beam is connected to the second suspension component on a second side of the vehicle.

14. A method of manufacturing the support beam according to any one of claims 1 to 10, the method comprising:
producing a support beam comprising:
a first mounting member configured for connection to the first suspension component at a first side of a vehicle;
a second mounting member configured for connection to the second suspension component at a second side of a vehicle; and
a housing portion between the first mounting member of the support beam and the second mounting member of the support beam;
wherein the housing portion is configured for housing high voltage electrical components.

15. The method of claim 14 wherein the first mounting member, the second mounting member and the housing portion are produced as an integral component.
